# EUROPÄISCHE PATENTSCHRIFT

(11) **EP 2 599 174 B1**
(45) Veröffentlichungstag und Bekanntmachung des Hinweises auf die Patenterteilung: **18.10.2017**
(21) Anmeldenummer: 11718657.7
(22) Anmeldetag: 16.04.2011
(51) Int. Cl.: B61K 13/00, H02G 3/04, H02G 3/06, B61L 15/00

(54) **SIGNALKABEL SOWIE FAHRZEUG, INSBESONDERE SCHIENENFAHRZEUG MIT EINEM DERARTIGEN SIGNALKABEL**
SIGNAL CABLE AND VEHICLE, IN PARTICULAR RAIL VEHICLE HAVING SUCH A SIGNAL CABLE
CÂBLE DE SIGNALISATION AINSI QUE VÉHICULE, EN PARTICULIER VÉHICULE FERROVIAIRE, DOTÉ D'UN TEL CÂBLE DE SIGNALISATION

(30) Priorität: 26.07.2010 DE 202010010666 U
(43) Veröffentlichungstag der Anmeldung: 05.06.2013
(73) Patentinhaber: Noris Automation Gmbh, 90429 Nürnberg (DE)
(72) Erfinder: BÄRREIS, Bernd, 91207 Lauf an der Pegnitz (DE)
(74) Vertreter: FDST Patentanwälte
(86) Internationale Anmeldenummer: PCT/EP2011/001939
(87) Internationale Veröffentlichungsnummer: WO 2012/016602

(56) Entgegenhaltungen:
- EP-A1- 1 764 211
- EP-A1- 1 902 893
- DE-A1- 10 138 124
- DE-A1- 19 523 911
- US-E- R E35 820

## Beschreibung

Die Erfindung betrifft ein Signalkabel insbesondere für Schienenfahrzeuge welches vorzugsweise zur Montage im bodenseitigen Außenbereich vorgesehen ist und welches eine Signalleitung umfasst, die in einem Schutzelement unter Ausbildung eines Zwischenraums lose einliegend bis zu einer endseitigen Anschlussarmatur zum Anschluss einer Sensoreinheit geführt ist.

Derartige Signalkabel werden beispielsweise bei Schienenfahrzeugen zu an der Fahrzeugunterseite angeordnete Komponenten wie beispielsweise Antriebsmotoren, Fahrgestellbaugruppen, Getriebeeinheiten etc. geführt, um von dort angeordneten Sensoren, beispielsweise Temperatursensoren, Drehzahlsensoren etc. erfasste Messwerte zu einer zentralen Steuereinheit zu übermitteln.

Aufgrund der Anordnung im hochbelasteten Außenbereich müssen derartige Signalkabel eine extrem hohe Widerstandsfähigkeit im Hinblick auf thermische und mechanische Beanspruchungen und auch eine gewisse Medienbeständigkeit gegenüber Fluiden aufweisen. Insbesondere sind derartige Signalkabel einer hohen mechanischen Belastung durch aufgewirbelte Steine, Dreckpartikel oder auch Eisbrocken ausgesetzt. Zudem müssen die Signalkabel diesen hohen mechanischen Belastungen über einen extrem großen Temperaturbereich beispielsweise von -50°C bis +100°C standhalten.

Aufgrund dieser hohen Belastungen ist die eigentliche Signalleitung üblicherweise in einem Kunststoff-Wellrohr als Schutzelement lose einliegend geführt. Die eigentliche Signalleitung selbst umfasst hierbei die für die Signalübertragung erforderlichen elektrischen Signaladern sowie einen äußeren Leitungsmantel. Diese Signalleitung ist eine eigenständige, von dem Wellrohr beziehungsweise dem Schutzelement getrennte Baueinheit, und liegt daher in dieser lediglich lose unter Ausbildung eines in etwa konzentrischen Zwischenraums ein. Die Signalleitung und das Wellrohr sind üblicherweise lediglich im Bereich der endseitigen Anschlussarmaturen miteinander verbunden.

Aufgrund der vorgeschriebenen Normen muss das die Signalleitung umgebende Schutzelement zusätzlich gewissen Brandschutzbedingungen genügen und insbesondere feuerhemmend sein, beispielsweise gemäß der DIN 5510.

Die für die Wellrohre verfügbaren Materialien, die diese Norm erfüllen und damit feuerhemmend sind, haben jedoch - wie Erfahrungswerte zeigen - nur unbefriedigende Widerstandsfähigkeiten, so dass sie rasch verschleißen.

Im Kraftfahrzeugbereich sind Messfühler beispielsweise zur Bestimmung des Sauerstoffgehalts in Abgasen von Verbrennungsmotoren bekannt. In der DE 101 38 124 A1 wird ein derartiger Messfühler beschrieben, bei dem innerhalb eines Metallrohres zwei von einem Kunststoff-Isolationsmantel umgebene Leiter bis zu einem Sensorelement geführt sind.

Der Erfindung liegt daher die Aufgabe zugrunde, die Verschleißbeständigkeit zu verbessern.

Diese Aufgabe wird gemäß der Erfindung gelöst durch ein Signalkabel mit den Merkmalen des Anspruchs 1. Das Signalkabel weist insbesondere eine spezielle Kombination aus einem Hydraulikschlauch als Schutzelement mit einer darauf abgestimmten Anschlussarmatur auf. Durch diese Kombination ist eine hohe Verschleißbeständigkeit bei Gewährleistung eines dauerhaft zuverlässigen Betriebes unter Berücksichtigung auch der feuertechnischen Anforderung bei zugleich guter Montagefreundlichkeit gegeben.

Bereits die Verwendung des speziellen Hydraulikschlauches als Schutzelement als auch die Anschlussarmatur als solche werden als eigenständig erfinderisch angesehen.

Bezüglich einer Anschlussarmatur zum Anschluss eines derartigen Signalkabels an eine Sensoreinheit oder Außenanschluss wird die Aufgabe gelöst durch die Merkmale des Anspruchs 14. Bezüglich eines ein derartiges Signalkabel umfassenden Fahrzeugs wird die Aufgabe erfindungsgemäß gelöst durch die Merkmale des Anspruchs 15. Vorteilhafte Weiterbildungen und Ausgestaltungen sind Gegenstand der Unteransprüche.

Im Hinblick auf das Signalkabel ist vorgesehen, dass an Stelle des bisher verwendeten Kunststoff-Wellrohrs ein mit einer Armierung versehener Hydraulikschlauch als Schutzelement herangezogen wird.

Für eine verbesserte mechanische Widerstandsfähigkeit ist insbesondere die Armierung des Hydraulikschlauchs von entscheidender Bedeutung. Vorzugsweise ist eine lediglich einlagige Armierung vorgesehen. Bei höheren mechanischen Anforderungen können auch mehrlagige Armierungen vorgesehen werden. Unter Hydraulikschläuchen werden Schläuche für Hydraulikanwendungen verstanden, die zur Führung von unter hohem Druck (>2 MPa) stehenden Fluiden geeignet sind.

Durch die Verwendung eines Hydraulikschlauches als Schutzelement ist die Haltbarkeit und Belastbarkeit des erfindungsgemäßen Signalkabels besonders hoch.

In einer zweckdienlichen Ausgestaltung ist der Hydraulikschlauch insbesondere für den sogenannten Mitteldruck-Bereich ausgebildet. Der Mitteldruck-Bereich umfasst Betriebsdrücke größer 5 MPa und insbesondere größer als 10 MPa. Derartige Mitteldruck-Schläuche genügen den hohen Anforderungen welche an einen Schutzschlauch des Signalkabels gestellt werden. Sie erfüllen einerseits die brandschutztechnischen Anforderungen insbesondere gemäß der DIN 5510, und andererseits weisen sie auch eine besonders hohe mechanische und thermische Widerstandsfähigkeit sowie eine besonders gute Medienbeständigkeit auf.

Unter Armierung wird allgemein eine Lage, insbesondere Zwischenlage im Aufbau des Schlauches verstanden, die eine im Vergleich zu der oder den weiteren Lagen erhöhte mechanische Widerstandsfähigkeit, insbesondere eine erhöhte Druck-und/oder Zugfestigkeit aufweist.

Vorzugsweise ist die Armierung als eine metallische Armierung, insbesondere als eine Stahlarmierung ausgebildet. In einer vorteilhaften Ausführung handelt es sich bei der Armierung vorzugsweise um eine vollflächige, schlauchartige Armierung, insbesondere ein Geflecht, aus einer Vielzahl von einzelnen Stahldrähten, die eine geschlossene Mantelfläche bilden. Dadurch wird ist der Hydraulikschlauch besonders robust und verschleißfest.

Alternativ zur Stahlarmierung können auch andere Armierungen, insbesondere geeignete Textillagen, beispielsweise Gewebe oder Geflechte aus widerstandsfähigen (Textil-)fasern, wie beispielsweise Aramidfasern, verwendet werden.

In einer geeigneten Weiterführung ist der Hydraulikschlauch insgesamt mehrlagig ausgebildet und weist eine Innenlage oder einen Innenschlauch aus einem elastischen Material, beispielsweise ein geeigneter Kunststoff oder auch einen Gummi auf, welcher die Führung für die Signalleitung bildet. Weiterhin ist vorzugsweise eine ebenfalls rohr- oder schlauchförmige Außenlage ebenfalls aus einem feuerhemmenden elastischen Material, beispielsweise ein geeigneter Kunststoff und insbesondere ein geeigneter Gummi vorgesehen. Die Verwendung von Gummi für die äußere Lage ist von besonderem Vorteil, um eine hohe Schlagzähigkeit gegenüber den im Betrieb auftretenden mechanischen Belastungen zu gewährleisten. In einer typischen Ausführungsform ist der Hydraulikschlauch dreilagig, wobei die Armierung als mittlere Lage zwischen der Innen- und der Außenlage angeordnet ist.

Um den Eintritt von Feuchtigkeit insbesondere in den Zwischenraum zwischen Signalleitung und der Innenlage des Hydraulikschlauchs zu verhindern, um damit die elektrischen Elemente vor Feuchtigkeit zu schützen, ist in einer bevorzugten Ausführung ein erstes Dichtelement in der Anschlussarmatur vorgesehen.

Aufgrund der Stahlarmierung weist der Hydraulikschlauch und somit das Signalkabel insgesamt eine hohe Torsionssteifigkeit auf, die im Vergleich zu den bisher eingesetzten Kunststoff-Wellrohren um ein Vielfaches größer ist. Dies ist jedoch für die Montage von Nachteil. Daher ist in zweckdienlicher Weiterbildung vorgesehen, die Anschlussarmatur derart auszugestalten, dass der Hydraulikschlauch in der Anschlussarmatur, insbesondere wenn diese an der Sensoreinheit befestigt ist, drehbar gelagert ist, bzw. dass Teile der Anschlussarmatur zueinander drehbar sind, wobei der Hydraulikschlauch an einem dieser Elemente drehfest angeordnet ist. Trotz dieser drehbaren Ausgestaltung bleibt die zuvor beschriebene Abdichtung erhalten.

Hierzu weist die Anschlussarmatur vorzugweise eine Einsteckhülse auf, die in den Hydraulikschlauch abdichtend eingesteckt ist und durch die die Signalleitung insbesondere lose einliegend geführt ist. Die Einsteckhülse ist in einem hülsenförmigen Überwurfelement, insbesondere eine Überwurfmutter drehbar gelagert. Die Einsteckhülse steht hierbei über die Überwurfmutter rückseitig über, so dass im Anschluss an die Überwurfmutter mit Hilfe einer Schlauchschelle der Hydraulikschlauch abdichtend und fest (drehfest) auf die Einsteckhülse aufgeklemmt werden kann.

Die Einsteckhülse ist zur Überwurfmutter bevorzugt mit Hilfe des ersten Dichtelements, wel-ches insbesondere eine Ringdichtung, beispielsweise ein O-Ring, ist abgedichtet. Hierzu weist die Einsteckhülse vorzugsweise einen Außenkragen und komple-mentär hierzu die Überwurfmutter einen Innenkragen auf, zwischen denen das erste Dichtelement einliegt.

Der Hydraulikschlauch ist in einer zweckdienlichen Weiterbildung von hinten in die Überwurfmutter in einen zylinderförmigen Einsteckraum eingesteckt, welcher stirnseitig von einem Anschlag, insbesondere dem Innenkragen begrenzt ist. Zwischen diesem Anschlag und dem stirnseitigen Ende des Hydraulikschlauchs ist vorzugsweise ein zweites Dichtelement vorgesehen, welches bereits für eine gewisse Vorabdichtung sorgt. Ergänzend ist dieses zweite Dichtelement aus einem elektrisch isolierenden Werkstoff ausgebildet und derart angeordnet, dass es die Armierung des Hydraulikschlauchs zur Anschlussarmatur hin elektrisch isoliert, die üblicherweise aus Metall besteht.

Weiterhin ist in zweckdienlichen Weiterbildungen vorgesehen, dass die Signalleitung durch die Anschlussarmatur abgedichtet zur Sensoreinheit hindurchgeführt ist. Hierzu ist die Signalleitung bevorzugt in ein Durchführungselement der Anschlussarmatur eingeklebt oder es ist alternativ eine an sich bekannte Kabelverschraubung vorgesehen. Für diese Kabelverschraubung ist das Durchführungselement mit einem Gewinde zum Einschrauben in die Überwurfmutter ausgebildet, unter Zwischenlage eines zylinderhülsenförmigen dritten Dichtelements. Beim Verschrauben werden auf dieses - beispielsweise durch eine konische Ausgestaltung einer Anschlagfläche, gegen die das weitere Dichtelement gepresst wird - radiale Kräfte ausgeübt, so dass sich das Dichtelement dichtend an die Signalleitung anschmiegt. Bevorzugt weist die Signalleitung mehrere von einem gemeinsamen Leitungsmantel umgebene Leitungsadern auf, wodurch - im Vergleich zu einer Signalleitung mit einzelnen miteinander verdrillten Leitungsadern ohne Leitungsmantel - eine zuverlässige Abdichtung sichergestellt ist.

Weiterhin ist das Durchführelement selbst zur Sensoreinheit hin, insbesondere zu einem Anschlussfuß der Sensoreinheit abgedichtet. Das Durchführungselement wird hierzu beispielsweise in den Anschlussfuß eingeschraubt und die Abdichtung erfolgt in an sich bekannter Weise über eine Ringdichtung (O-Ring).

Nachfolgend wird ein Ausführungsbeispiel der Erfindung anhand einer Zeichnung näher erläutert. Es zeigen teilweise in vereinfachten und schematischen Darstellungen:
- Fig. 1: in Draufsicht ein Schienenfahrzeug (Zug) in dessen Bodenbereich ein Signalkabel zu einer Sensoreinheit geführt ist,
- Fig. 2: in Schnittdarstellung das Signalkabel entlang der Linie II-II gemäß Fig.1,
- Fig. 3: in Querschnittsdarstellung ausschnittsweise eine Anschlussarmatur des Signalkabels mit daran angeschlossenem Hydraulikschlauch,
- Fig. 4: in Perspektive die Anschlussarmatur mit Hydraulikschlauch ohne Kabelverschraubung,
- Fig. 5: eine Seitenansicht auf das Signalkabel mit einer ersten Sensoreinheit,
- Fig. 6: eine Seitenansicht auf das Signalkabel mit einer zweiten Sensoreinheit, und
- Fig. 7: in Aufsicht einen Kabelbaum umfassend drei Signalkabel mit jeweils einer Sensoreinheit.

Einander entsprechende Teile und Größen sind in allen Figuren stets mit den gleichen Bezugszeichen versehen.

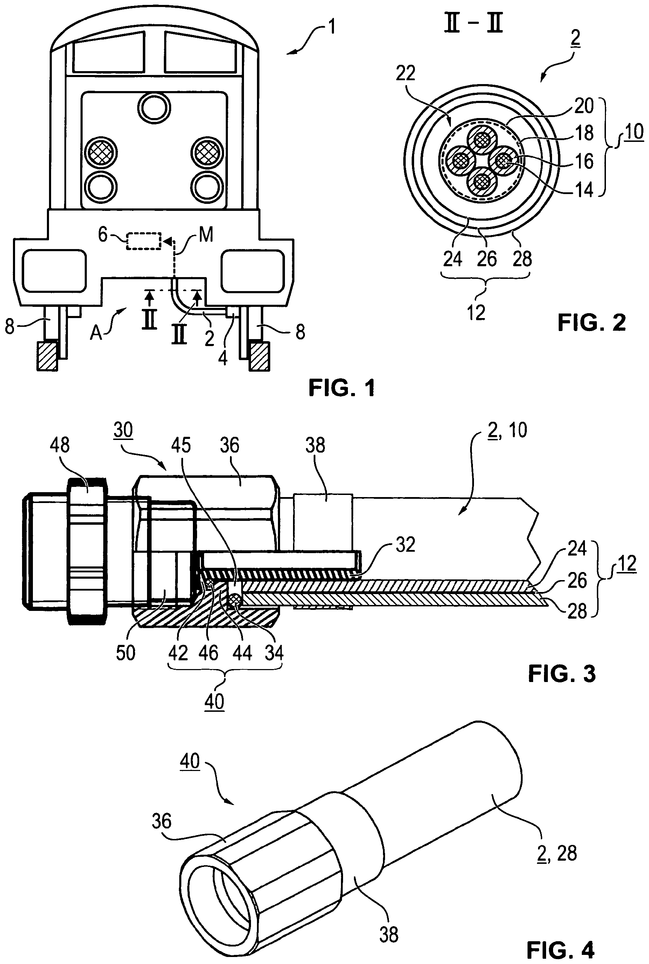

Fig. 1 zeigt schematisch ein Schienenfahrzeug 1 in dessen bodenseitigen Außenbereich A ein Signalkabel 2 angeordnet ist, mit dem eine Sensoreinheit 4 mit einer zentralen Steuereinheit 6 signaltechnisch gekoppelt ist. Die Sensoreinheit 4 ist nahe einem Schienenrad 8 angeordnet, und die Steuereinheit 6 befindet sich im Fahrzeuginneren. Die Steuereinheit 6 ist in dieser Ausführung im Wesentlichen durch einen Mikrokontroller mit einer darauf implementierten Steuer- und Auswertesoftware gebildet und dient zur Auswertung eines von der Sensoreinheit 4 vorzugsweise bereits aufbereiteten Messsignals M.

Wie insbesondere aus Fig. 2 erkennbar ist umfasst das Signalkabel 2 eine Signalleitung 10 und einen dreilagigen Hydraulikschlauch 12. Die Signalleitung 10 dient zur signaltechnischen Übertragung der von der Sensoreinheit 4 aufgenommenen Messdaten M an die Steuereinheit 6. Die Signalleitung 10 ist im Ausführungsbeispiel mit vier Signaladern 14 ausgeführt, die jeweils von einer Isolation 16 umschlossen sind. Die vier Signaladern 14 sind von einer gemeinsamen Abschirmung 18 und einer Mantelhülle 20 als Leitungsmantel umgeben. Die Signalleitung 10 liegt lose unter Ausbildung eines konzentrischen Zwischenraums 22 innerhalb des Hydraulikschlauchs 12 ein.

Die Signaladern 14 sind im Ausführungsbeispiel als Kupferlitzen ausgeführt, die Isolation 16 besteht aus einem elektrisch nicht leitfähigen Kunststoffmaterial, die Abschirmung 18 wird durch ein Metall-Geflecht gebildet und die Mantelhülle 20 ist aus einem Elastomer hergestellt. Für die Signalleitung 10 werden die Materialien und Bemessungen so gewählt, dass sie für den Einsatz im Außenbereich A des Zuges 1 geeignet und eingerichtet ist. Insbesondere wird darauf geachtet, dass die Signalleitung 10 eine hohe Temperaturbeständigkeit sowie eine hohe Torsions- und Biegebeanspruchbarkeit aufweist.

Der Hydraulikschlauch 12 ist im Ausführungsbeispiel dreilagig ausgebildet. Er weist eine der Signalleitung 10 zugewandten Innenlage 24 zur Führung der Signalleitung 10 auf, die aus einem elastischen Kunststoffmaterial hergestellt ist. Als eine Mittellage ist um die Innenlage 24 eine Armierung 26 angeordnet. Bei der Armierung 26 handelt es sich hierbei um ein vollflächiges, schlauchartiges Geflecht aus einer Vielzahl von einzelnen Stahldrähten, die eine geschlossene Mantelfläche bilden.

Eine Außenlage 28 umschließt die Armierung 12 zum Außenraum A hin. Die Außenlage 28 ist aus einem elastischen und feuerhemmenden Material, insbesondere Gummi hergestellt, der eine hohe Schlagzähigkeit gegenüber den im Betrieb des Schienenfahrzeugs 1 auftretenden mechanischen Belastungen, wie beispielsweise aufgewirbelte Steine gewährleistet.

Der Hydraulikschlauch 12 ist insbesondere für einen Fluiddruck > 5 MPa, insbesondere > 10 MPa ausgebildet und weist aufgrund des Stahlgeflechts der Armierung 26 eine extrem hohe Beständigkeit gegenüber mechanischen Beanspruchungen auf, so dass er besonders gut als Kabelschutzschlauch für die Signalleitung 2 geeignet ist. Insbesondere ist der Gummi der Außenlage 28 so gewählt, dass die brandschutztechnischen Anforderungen gemäß der DIN 5510 erfüllt sind.

Für den Anschluss des Signalkabels 2 an der Sensoreinheit 4 oder einem Außenstecker zur Kopplung an die Steuereinheit 6 weist das Signalkabel 2 an seinen Enden jeweils eine Anschlussarmatur 30 auf.

Die Anschlussarmatur 30 ist derart ausgestaltet, dass der Hydraulikschlauch 12 in der Anschlussarmatur 30 drehbar gelagert ist. Das heißt, dass Teile der Anschlussarmatur 30 zueinander drehbar sind, wobei der Hydraulikschlauch 12 hierzu an einer Einsteckhülse 32 drehfest angeordnet ist. Der Hydraulikschlauch 12 ist in die Einsteckhülse 32 passgenau und abdichtend eingesteckt, und die Signalleitung 4 ist lose einliegend in der Einsteckhülse 32 geführt.

Um den Eintritt von Feuchtigkeit in den Zwischenraum 22 zwischen Signalleitung 10 und der Innenlage 24 des Hydraulikschlauchs 12 zu verhindern, um damit die Signaladern 14 vor Feuchtigkeit zu schützen, ist ein O-Ring 34 als ein erstes Dichtelement in der Anschlussarmatur 30 vorgesehen.

Die Einsteckhülse 32 ist in einer Überwurfmutter 36 drehbar gelagert. Die Einsteckhülse 32 steht hierbei über die Überwurfmutter 36 rückseitig über, so dass im Anschluss an die Überwurfmutter 36 mit Hilfe einer Schlauchschelle 38 der Hydraulikschlauch 12 abdichtend und drehfest auf der Einsteckhülse 32 klemmbefestigt ist. Die Einsteckhülse 32, die Überwurfmutter 36 und die Schlauchschelle 38 bilden eine Torsions-Baugruppe 40 der Anschlussarmatur 30, die es ermöglicht, einerseits eine drehfeste Verbindung zwischen einer Sensoreinheit 4 und der Überwurfmutter 36 zu bilden und andererseits der Hydraulikschlauch 12 dazu relativ gesehen um bis zu 360° verspannungsfrei verdrehbar ist.

Die Einsteckhülse 32 ist zur Überwurfmutter 36 mit Hilfe des O-Rings 34 abgedichtet. Hierzu weist die Einsteckhülse 32 einen Außenkragen 42 und komple-mentär hierzu die Überwurfmutter 36 einen Innenkragen 44 auf, zwischen denen der O-Ring 34 einliegt.

Der Hydraulikschlauch 12 ist von hinten in die Überwurfmutter 36 in einen zylinderförmigen Einsteckraum 45 eingesteckt, welcher stirnseitig von dem Innenkragen 44 begrenzt ist. Zwischen dem Innenkragen 44 und dem stirnseitigen Ende des Hydraulikschlauchs 12 ist vorzugsweise ein zweiter O-Ring 46 vorgesehen. Die O-Ringe 34 und 46 sind aus einem elektrisch isolierenden Werkstoff ausgebildet. Letzter dient zur elektrischen Isolierung der Armierung 26 des Hydraulikschlauchs 12 zur Anschlussarmatur 30 hin, die üblicherweise aus Metall gefertigt ist.

An die Überwurfmutter 36 schließt sich eine Kabelverschraubung 48 an. Die Kabelverschraubung 48 ist mit einem Gewinde zum Einschrauben in die Überwurfmutter 36 ausgebildet, unter Zwischenlage eines zylinderhülsenförmigen Dichtelements 50. Beim Verschrauben werden auf dieses radiale Kräfte ausgeübt, so dass sich das Dichtelement 50 dichtend an die Mantelhülle 20 der Signalleitung 10 anschmiegt. Die Schraubverbindung zwischen Kabelverschraubung 48 und Überwurfmutter 36 bildet hierbei die drehfeste Verbindung der Anschlussarmatur 30, die gegenüber dem Signalkabel 2 drehbar ist.

Weiterhin ist die Kabelverschraubung 48 selbst zur Sensoreinheit 4 hin, insbesondere zu einem Anschlussfuß 50 der Sensoreinheit 4 abgedichtet. Die Kabelverschraubung 48 wird hierzu in den Anschlussfuß 50 eingeschraubt und die Abdichtung erfolgt über eine Ringdichtung.

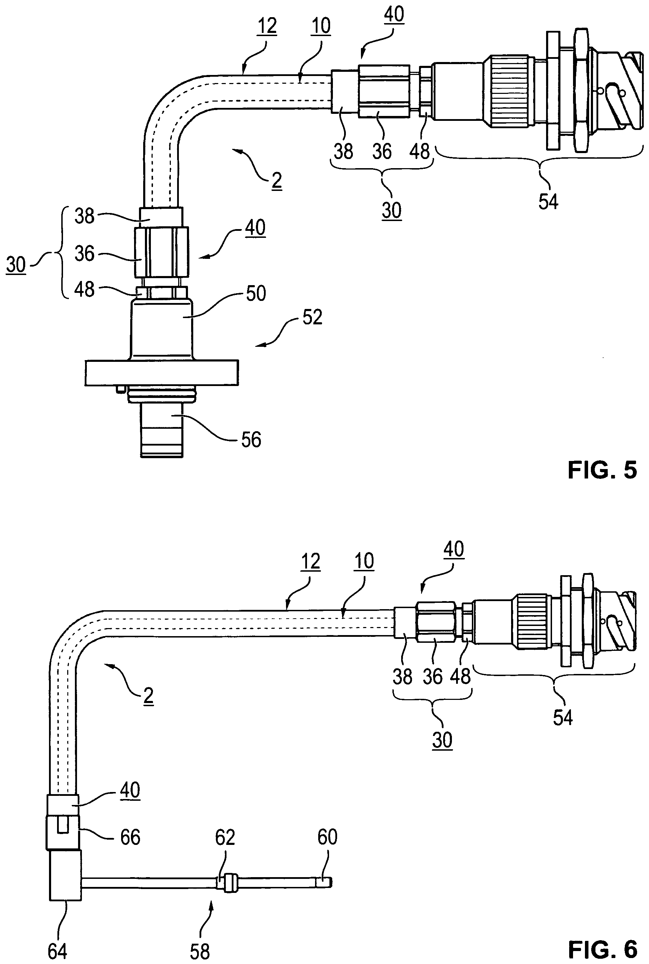

In Fig. 5 ist ein erstes Anwendungsbeispiel für das Signalkabel 2 dargestellt. In dieser Anwendung ist die Sensoreinheit 4 als ein Drehzahlsensor 52 ausgeführt. Der Drehzahlsensor 52 weist ein Gewinde auf, in der der sensorseitige Kabelanschluss 48 der Anschlussarmatur 40 eingeschraubt ist. Zur signaltechnischen Kopplung der Anschlussarmatur 30 an einem Außenanschluß der Steuereinheit 6 ist der Kabelanschluss 48 am anderen Ende des Signalkabels 2 in einen Außenstecker 54 geschraubt. Der Drehzahlsensor 52 umfasst insbesondere einen Hall-Sensor 56, der in seiner anwendungstypischen Einbausituation nahe dem Schienenrad 8 angeordnet ist und dessen Drehzahl in an sich bekannter Weise erfasst.

Fig. 6 zeigt ein weiteres Anwendungsbeispiel, bei dem das Signalkabel 2 an einen Temperatursensor 58 angeschlossen ist. Der Temperatursensor 58 weist ein Thermoelement 60, einen Sensorstab 62 und einen Sensorkopf 64 auf, der über ein Adapterteil 66 als Durchführelement der Signalleitung 10 mit der Torsions-Baugruppe 40 des sensorseitigen Signalkabelendes verbunden ist.

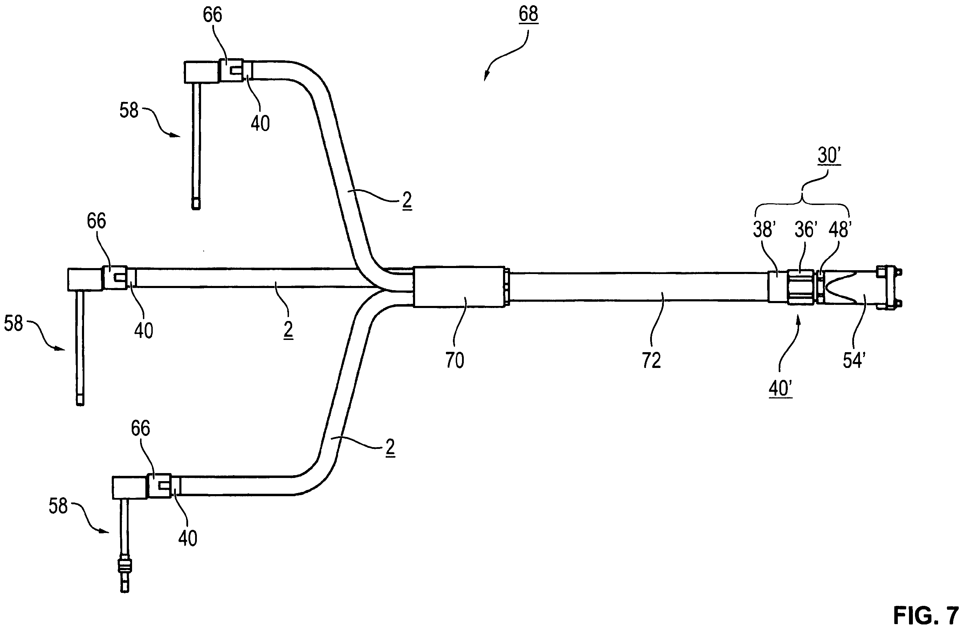

In Fig. 7 ist ein drittes Anwendungsbeispiel gezeigt, bei dem drei Signalkabel 2 Teil eines Kabelbaums 68 sind. Die Signalkabel 2 weisen jeweils einen Temperatursensor 58 auf, der über das Adapterteil 66 mit der Torsions-Baugruppe 40 gekoppelt ist. Die Signalkabel 2 werden an einem Sammelmodul 70 zu einem gemeinsamen Signalstrang 72 gebündelt. Die Signalkabel 2 werden dabei längswasserdicht in das Sammelmodul 70 eingeführt. Der Signalstrang 72 weist an seinem Ende eine Anschlussarmatur 30', mit einer Signalstrangschelle 38', einer

Überwurfmutter 36' und einem Kabelanschluss 48', auf. Durch eine Torsions-Baugruppe 40' ist der Signalstrang 72 relativ zu einem Außenstecker 54' drehbar gelagert.

Die Erfindung ist nicht auf die vorstehend beschriebenen Ausführungsbeispiele beschränkt. Vielmehr können auch andere Varianten der Erfindung von dem Fachmann hieraus abgeleitet werden ohne den Gegenstand der Erfindung zu verlassen. Insbesondere sind ferner alle im Zusammenhang mit den verschiedenen Ausführungsbeispielen beschriebenen Einzelmerkmale auch auf andere Weise miteinander kombinierbar, ohne den Gegenstand der Erfindung zu verlassen.

**Bezugszeichenliste**

| | | | |
|---|---|---|---|
| 1 | Schienenfahrzeug | 60 | Thermoelement |
| 2 | Signalkabel | 62 | Sensorstab |
| 4 | Sensoreinheit | 64 | Sensorkopf |
| 6 | Steuereinheit | 66 | Adapter |
| 8 | Schienenrad | 68 | Kabelbaum |
| 10 | Signalleitung | 70 | Sammelmodul |
| 12 | Hydraulikschlauch | 72 | Signalstrang |
| 14 | Signalader | | |
| 16 | Isolation | A | Außenbereich |
| 18 | Abschirmung | M | Messsignal |
| 20 | Mantelhülle | | |
| 22 | Zwischenraum | | |
| 24 | Innenlage | | |
| 26 | Stahlgeflechtarmierung | | |
| 28 | Außenlage | | |
| 30, 30' | Anschlussarmatur | | |
| 32 | Einsteckhülse | | |
| 34 | O-Ring | | |
| 36, 36' | Überwurfmutter | | |
| 38, 38' | Schlauchschelle | | |
| 40, 40' | Torsions-Baugruppe | | |
| 42 | Außenkragen | | |
| 44 | Innenkragen | | |
| 45 | Einsteckraum | | |
| 46 | O-Ring | | |
| 48, 48' | Kabelanschluss | | |
| 50 | Dichtelement | | |
| 52 | Drehzahlsensor | | |
| 54, 54' | Außenstecker | | |
| 56 | Hall-Sensor | | |
| 58 | Temperatursensor | | |

## Patentansprüche

1. Signalkabel (2) insbesondere für Schienenfahrzeuge und zur Montage in einem bodenseitigen Außenbereich (A), mit einer Signalleitung (10), die in einem Schutzelement (12) unter Ausbildung eines Zwischenraums (22) lose einliegend bis zu einer endseitigen Anschlussarmatur (30) zum Anschluss an eine Sensoreinheit (4, 52, 58) geführt ist,
**dadurch gekennzeichnet,**
**dass** das Schutzelement (12) als ein Hydraulikschlauch (12) mit einer Armierung (26) ausgebildet ist.

2. Signalkabel (2) nach Anspruch 1,
**dadurch gekennzeichnet,**
**dass** die Armierung (26) eine Stahlarmierung ist, die einen vorzugsweise vollflächigen Stahlgeflechtschlauch bildet.

3. Signalkabel (2) nach einem der Ansprüche 1 oder 2,
**dadurch gekennzeichnet,**
**dass** der Schlauch (12) feuerhemmend ist.

4. Signalkabel (2) nach einem der Ansprüche 1 bis 3,
**dadurch gekennzeichnet,**
**dass** der Schlauch (12) mehrlagig ausgebildet ist mit einer Innenlage (24) aus einem elastischen Material, mit einer von der Armierung (26) gebildeten mittleren Lage und mit einer äußeren Lage (28) aus einem feuerhemmenden elastischen Material.

5. Signalkabel (2) nach einem der Ansprüche 1 bis 4,
**dadurch gekennzeichnet,**
**dass** die Anschlussarmatur (30) für eine drehfeste Verbindung mit der Sensoreinheit (2) ausgebildet ist und gleichzeitig der Schlauch (12) in der Anschlussarmatur (30) drehbar ist.

6. Signalkabel (2) nach einem der Ansprüche 1 bis 5
**dadurch gekennzeichnet,**
**dass** die Anschlussarmatur (30) eine Einsteckhülse (32) aufweist, die in den Schlauch (12) eingesteckt ist und durch die die Signalleitung (2) geführt ist, wobei die Einsteckhülse (32) in einem hülsenförmigen Überwurfelement (36), insbesondere Überwurfmutter drehbar gelagert ist.

7. Signalkabel (2) nach Anspruch 6,
**dadurch gekennzeichnet,**
**dass** die Einsteckhülse (32) einen Außenkragen (42) und das Überwurfelement (36) einen Innenkragen (44) aufweist, auf den sich der Außenkragen (44) unter Zwischenlage eines ersten Dichtelements (34) abstützt.

8. Signalkabel (2) nach einem der Ansprüche 6 oder 7,
**dadurch gekennzeichnet,**
**dass** das Überwurfelement (36) einen rückseitigen zylinderförmigen Einsteckraum (45) aufweist, der von einem Anschlag, insbesondere dem Innenkragen (44) begrenzt ist und in den der Schlauch (12) eingesteckt ist, wobei zwischen dem Anschlag und einem stirnseitigen Ende des Schlauches (12) ein zweites Dichtelement (46) vorgesehen ist.

9. Signalkabel (2) nach Anspruch 8,
**dadurch gekennzeichnet,**
**dass** das zweite Dichtelement (46) zur elektrischen Isolierung zwischen der Armierung (26) und dem Überwurfelement (36) angeordnet ist.

10. Signalkabel (2) nach einem der Ansprüche 1 bis 9,
**dadurch gekennzeichnet,**
**dass** die Anschlussarmatur (30) ein sich an das Überwurfelement (36) anschließendes Durchführelement (48, 66), insbesondere eine sogenannte Kabelverschraubung, aufweist, das zur dichten Durchführung der Signalleitung (10) zur Sensoreinheit (4, 52, 58) ausgebildet ist.

11. Signalkabel (2) nach Anspruch 10,
**dadurch gekennzeichnet,**
**dass** das Durchführelement (48, 66) in das Überwurfelement (36) unter Zwischenlage eines dritten Dichtelements (50) eingeschraubt ist.

12. Signalkabel (2) nach einem der Ansprüche 10 oder 11,
**dadurch gekennzeichnet,**
**dass** das Durchführelement (48, 66) über eine abgedichtete Schraubverbindung mit der Sensoreinheit (4, 52, 58), insbesondere mit einem Anschlussfuß (50) der Sensoreinheit (4, 52, 58), verbindbar ist.

13. Signalkabel (2) nach einem der vorhergehenden Ansprüche angeordnet in einem bodenseitigen Außenbereich (A) eines Fahrzeuges, insbesondere eines Schienenfahrzeuges, mit der Signalleitung (10), die in dem Schutzelement (12) unter Ausbildung des Zwischenraums (22) lose einliegend bis zu der endseitigen Anschlussarmatur (30) geführt ist, an der die Sensoreinheit (4, 52, 58) angeschlossen ist,
**dadurch gekennzeichnet,**
**dass**
- das Schutzelement (12) als ein mehrlagiger Hydraulikschlauch (12) mit einer Innenlage (24) aus einem elastischen Material, mit einer von einer Armierung (26) gebildeten mittleren Lage und mit einer äußeren Lage (28) aus einem feuerhemmenden elastischen Material ausgebildet sowie für einen Betriebsdruck größer 5 MPa (50 bar) ausgelegt ist, und dass
- die Anschlussarmatur (30) für eine drehfeste Verbindung mit der Sensoreinheit (2) ausgebildet ist und gleichzeitig der Schlauch (12) in der Anschlussarmatur (30) drehbar ist, wobei hierzu
-- die Anschlussarmatur (30) eine Einsteckhülse (32) aufweist, die in den Schlauch (12) eingesteckt ist und durch die die Signalleitung (2) geführt ist, wobei die Einsteckhülse (32) in einem hülsenförmigen Überwurfelement (36), insbesondere Überwurfmutter drehbar gelagert ist
-- die Einsteckhülse (32) einen Außenkragen (42) und das Überwurfelement (36) einen Innenkragen (44) aufweist, auf den sich der Außenkragen (44) unter Zwischenlage eines ersten Dichtelements (34) abstützt
-- das Überwurfelement (36) einen rückseitigen zylinderförmigen Einsteckraum (45) aufweist, der von einem Anschlag, insbesondere dem Innenkragen (44) begrenzt ist und in den der Schlauch (12) eingesteckt ist, wobei zwischen dem Anschlag und einem stirnseitigen Ende des Schlauches (12) ein zweites Dichtelement (46) vorgesehen ist
--die Anschlussarmatur (30) ein sich an das Überwurfelement (36) anschließendes Durchführelement (48, 66), insbesondere eine sogenannte Kabelverschraubung, aufweist, das zur dichten Durchführung der Signalleitung (10) zur Sensoreinheit (4, 52, 58) ausgebildet ist
-- das Durchführelement (48, 66) über eine abgedichtete Schraubverbindung mit der Sensoreinheit (4, 52, 58), insbesondere mit einem Anschlussfuß (50) der Sensoreinheit (4, 52, 58), verbunden ist.

14. Anschlussarmatur (30) mit einem Signalkabel (2) nach einem der Ansprüche 1 bis 13.

15. Fahrzeug (1), insbesondere Schienenfahrzeug mit einem Signalkabel (2) nach einem der Ansprüche 1 bis 13, das insbesondere an einer Unterseite (A) im Freien verlegt ist.

## Claims

1. Signal cable (2), in particular for rail vehicles and for mounting in a ground-side external region (A), with a signal line (10), which is guided in a protective element (12) in a loosely resting manner, with formation of a gap (22), up to an end-side connection fitting (30) for connection to a sensor unit (4, 52, 58),
**characterised in that**
the protective element (12) is designed as a hydraulic hose (12) with a reinforcement (26).

2. Signal cable (2) according to claim 1,
**characterised in that**
the reinforcement (26) is a steel reinforcement which forms a preferably full-surface steel mesh hose.

3. Signal cable (2) according to either one of claims 1 or 2,
**characterised in that**
the hose (12) is fire-resistant.

4. Signal cable (2) according to one of claims 1 to 3,
**characterised in that**
the hose (12) is multi-layered with an inner layer (24) made of a resilient material, with a middle layer formed by the reinforcement (26), and with an outer layer (28) made of a fire-resistant resilient material.

5. Signal cable (2) according to one of claims 1 to 4,
**characterised in that**
the connection fitting (30) is designed for non-rotatable connection to the sensor unit (2), and at the same time the hose (12) is rotatable in the connection fitting (30).

6. Signal cable (2) according to one of claims 1 to 5,
**characterised in that**
the connection fitting (30) has an insertion sleeve (32), which is inserted into the hose (12) and through which the signal line (2) is guided, wherein the insertion sleeve (32) is rotatably mounted in a sleeve-like coupling element (36), in particular a union nut.

7. Signal cable (2) according to claim 6,
**characterised in that**
the insertion sleeve (32) has an external collar (42) and the coupling element (36) has an internal collar (44), on which the external collar (44) is supported with a first sealing element (34) arranged in-between.

8. Signal cable (2) according to either one of claims 6 or 7,
**characterised in that**
the coupling element (36) has a rear-side cylindrical insertion space (45), which is delimited by a stop, in particular the internal collar (44), and into which the hose (12) is inserted, wherein a second sealing element (46) is provided between the stop and an end face of the hose (12).

9. Signal cable (2) according to claim 8,
**characterised in that**
the second sealing element (46) is arranged between the reinforcement (26) and the coupling element (36) for electrical insulation.

10. Signal cable (2) according to one of claims 1 to 9,
**characterised in that**
the connection fitting (30) has a feedthrough element (48, 66) adjoining the coupling element (36), in particular what is known as a cable gland, which is designed to feed through the signal line (10) to the sensor unit (4, 52, 58) in a tight manner.

11. Signal cable (2) according to claim 10,
**characterised in that**
the feedthrough element (48, 66) is screwed into the coupling element (36) with a third sealing element (50) arranged in-between.

12. Signal cable (2) according to either one or claims 10 or 11,
**characterised in that**
the feedthrough element (48, 66) can be connected via a sealed screw connection to the sensor unit (4, 52, 58), in particular to a connection foot (50) of the sensor unit (4, 52, 58).

13. Signal cable (2) according to one of the preceding claims, arranged in a ground-side external region (A) of a vehicle, in particular a rail vehicle, with the signal line (10), which is guided in the protective element (12) in a loosely resting manner, with formation of the gap (22), up to the end-side connection fitting (30), to which the sensor unit (4, 52, 58) is connected,
**characterised in that**
- the protective element (12) is designed as a multi-layered hydraulic hose (12) with an inner layer (24) made of a resilient material, with a middle layer formed by a reinforcement (26), and with an outer layer (28) made of a fire-resistant resilient material, and is designed for an operating pressure greater than 5 MPa (50 bar), and **in that**
- the connection fitting (30) is designed for a non-rotatable connection to the sensor unit (2), and at the same time the hose (12) is rotatable in the connection fitting (30), wherein for this purpose
-- the connection fitting (30) has an insertion sleeve (32), which is inserted into the hose (12) and through which the signal line (2) is guided, wherein the insertion sleeve (32) is rotatably mounted in a sleeve-like coupling element (36), in particular a union nut,
-- the insertion sleeve (32) has an external collar (42) and the coupling element (36) has an internal collar (44), on which the external collar (44) is supported with a first sealing element (34) arranged in-between,
-- the coupling element (36) has a rear-side cylindrical insertion space (45), which is delimited by a stop, in particular the internal collar (44), and into which the hose (12) is inserted, wherein a second sealing element (46) is provided between the stop and an end face of the hose (12),
-- the connection fitting (30) has a feedthrough element (48, 66) adjoining the coupling element (36), in particular what is known as a cable gland, which is designed to feed through the signal line (10) to the sensor unit (4, 52, 58) in a tight manner,
-- the feedthrough element (48, 66) is connected via a sealed screw connection to the sensor unit (4, 52, 58), in particular to a connection foot (50) of the sensor unit (4, 52, 58).

14. Connection fitting (30) with a signal cable (2) according to one of claims 1 to 13.

15. Vehicle (1), in particular a rail vehicle, with a signal cable (2) according to one of claims 1 to 13, which in particular is installed outside on an underside (A).

## Revendications

1. Câble de transmission de signal (2), notamment pour véhicules ferroviaires, et destiné à être monté dans une zone extérieure (A) au niveau du plancher, le câble comprenant un conducteur de transmission de signal (10), qui est guidé dans un élément de protection (12) en y étant logé librement et en y formant un espace intermédiaire (22), et est mené jusqu'à un raccord de branchement (30) d'extrémité, destiné au raccordement à une unité de capteur (4, 52, 58),
**caractérisé**
**en ce que** l'élément de protection (12) est réalisé sous la forme d'un tuyau hydraulique (12) avec une armature de renfort (26).

2. Câble de transmission de signal (2) selon la revendication 1,
**caractérisé**
**en ce que** l'armature de renfort (26) est une armature de renfort en acier, qui de préférence forme un tuyau de tresse d'acier de surface complète.

3. Câble de transmission de signal (2) selon l'une des revendications 1 ou 2,
**caractérisé**
**en ce que** le tuyau (12) est ignifugé.

4. Câble de transmission de signal (2) selon l'une des revendications 1 à 3,
**caractérisé**
**en ce que** le tuyau (12) est d'une configuration à couches multiples, et comporte une couche intérieure (24) en un matériau élastique, une couche centrale formée par l'armature de renfort (26), et une couche extérieure (28) en un matériau élastique ignifugé.

5. Câble de transmission de signal (2) selon l'une des revendications 1 à 4,
**caractérisé**
**en ce que** le raccord de branchement (30) est conçu pour une liaison fixe en rotation avec l'unité de capteur (2), et simultanément pour permettre la rotation du tuyau (12) dans le raccord de branchement (30).

6. Câble de transmission de signal (2) selon l'une des revendications 1 à 5,
**caractérisé**
**en ce que** le raccord de branchement (30) présente une douille enfichable (32) qui est insérée dans le tuyau (12), et à travers laquelle est guidé et mené le conducteur de transmission de signal (2), la douille enfichable (32) étant montée rotative dans un élément-chapeau de raccord (36) en forme de douille, notamment un écrou-chapeau de raccord.

7. Câble de transmission de signal (2) selon la revendication 6,
**caractérisé**
**en ce que** la douille enfichable (32) présente une collerette extérieure (42) et l'élément-chapeau de raccord (36), une collerette intérieure (44), sur laquelle s'appuie la collerette extérieure (44) avec interposition d'un premier élément d'étanchéité (34).

8. Câble de transmission de signal (2) selon l'une des revendications 6 ou 7,
**caractérisé**
**en ce que** l'élément-chapeau de raccord (36) présente une chambre d'insertion arrière (45) de forme cylindrique, qui est délimitée par une butée, notamment la collerette intérieure (44), et dans laquelle est inséré le tuyau (12), un deuxième élément d'étanchéité (46) étant prévu entre la butée et l'extrémité frontale du tuyau (12).

9. Câble de transmission de signal (2) selon la revendication 8,
**caractérisé**
**en ce que** le deuxième élément d'étanchéité (46) est agencé entre l'armature de renfort (26) et l'élément-chapeau de raccord (36) pour assurer une isolation électrique.

10. Câble de transmission de signal (2) selon l'une des revendications 1 à 9,
**caractérisé**
**en ce que** le raccord de branchement (30) présente un élément de traversée (48, 66) se raccordant à l'élément-chapeau de raccord (36), notamment un passe-câble à vis, qui est configuré pour une traversée étanche du conducteur de transmission de signal (10) jusqu'à l'unité de capteur (4, 52, 58).

11. Câble de transmission de signal (2) selon la revendication 10,
**caractérisé**
**en ce que** l'élément de traversée (48, 66) est vissé dans l'élément-chapeau de raccord (36) avec interposition d'un troisième élément d'étanchéité (50).

12. Câble de transmission de signal (2) selon l'une des revendications 10 ou 11,
**caractérisé**
**en ce que** l'élément de traversée (48, 66) peut être relié, par l'intermédiaire d'une liaison vissée étanche, à l'unité de capteur (4, 52, 58), notamment à un pied de raccordement (50) de l'unité de capteur (4, 52, 58).

13. Câble de transmission de signal (2) selon l'une des revendications précédentes, agencé dans une zone extérieure (A) au niveau du plancher d'un véhicule, notamment d'un véhicule ferroviaire, avec le conducteur de transmission de signal (10), qui est guidé dans l'élément de protection (12) en y étant logé librement et en y formant un espace intermédiaire (22), et qui est mené jusqu'au raccord de branchement (30) d'extrémité, auquel est raccordé l'unité de capteur (4, 52, 58),
**caractérisé**
**en ce que**
- l'élément de protection (12) est réalisé en tant que tuyau hydraulique (12) à couches multiples, comportant une couche intérieure (24) en un matériau élastique, une couche centrale formée par une armature de renfort (26), et une couche extérieure (28) en un matériau élastique ignifugé, et configuré pour une pression de fonctionnement supérieure à 5 MPa (50 bar), et **en ce que**
- le raccord de branchement (30) est conçu pour une liaison fixe en rotation avec l'unité de capteur (2), et simultanément pour permettre la rotation du tuyau (12) dans le raccord de branchement (30), et à cet effet
--le raccord de branchement (30) présente une douille enfichable (32) qui est insérée dans le tuyau (12), et à travers laquelle est guidé et mené le conducteur de transmission de signal (2), la douille enfichable (32) étant montée rotative dans un élément-chapeau de raccord (36) en forme de douille, notamment un écrou-chapeau de raccord,
--la douille enfichable (32) présente une collerette extérieure (42) et l'élément-chapeau de raccord (36), une collerette intérieure (44) sur laquelle s'appuie la collerette extérieure (44) avec interposition d'un premier élément d'étanchéité (34),
--l'élément-chapeau de raccord (36) présente une chambre d'insertion arrière (45) de forme cylindrique, qui est délimitée par une butée, notamment la collerette intérieure (44), et dans laquelle est inséré le tuyau (12), un deuxième élément d'étanchéité (46) étant prévu entre la butée et l'extrémité frontale du tuyau (12),
--le raccord de branchement (30) présente un élément de traversée (48, 66) se raccordant à l'élément-chapeau de raccord (36), notamment un passe-câble à vis, qui est configuré pour une traversée étanche du conducteur de transmission de signal (10) jusqu'à l'unité de capteur (4, 52, 58),
--l'élément de traversée (48, 66) est relié, par l'intermédiaire d'une liaison vissée étanche, à l'unité de capteur (4, 52, 58), notamment à un pied de raccordement (50) de l'unité de capteur (4, 52, 58).

14. Raccord de branchement (30) comprenant un câble de transmission de signal (2) selon l'une des revendications 1 à 13.

15. Véhicule (1), notamment véhicule ferroviaire, comprenant un câble de transmission de signal (2) selon l'une des revendications 1 à 13, qui est notamment posé à l'air libre sur un côté inférieur de plancher (A).
